# EUROPEAN PATENT APPLICATION

(11) **EP 1 890 281 A1**
(43) Date of publication of application: **20.02.2008**
(21) Application number: 06730076.4
(22) Date of filing: 27.03.2006
(51) Int. Cl.: G09G 5/00, G06F 3/048, H04M 1/00

(54) **GUI CONTENT REPRODUCING DEVICE AND PROGRAM**

(30) Priority: 08.06.2005 JP 2005168754; 02.12.2005 JP 2005349369
(71) Applicant: MATSUSHITA ELECTRIC INDUSTRIAL CO., LTD., Osaka 571-8501 (JP)
(72) Inventor: SHIN, Hidehiko c/o Matsushita El. Ind. Co., Ltd., Chuo-ku, Osaka-shi, Osaka 540-6207 (JP); MIYAYAMA, Akiko c/o Matsushita El. Ind. Co., Ltd., Chuo-ku, Osaka-shi, Osaka 540-6207 (JP)
(74) Representative: Gassner, Wolfgang
(86) International application number: PCT/JP2006/306128
(87) International publication number: WO 2006/132021

(57) **Abstract**

Provided is a GUI content reproducing device which is capable of displaying a GUI content, starting from an arbitrary part thereof by utilizing an existing GUI content player. A GUI content player section (105), immediately after loading the GUI content, reproduces a first scene which is previously defined in a GUI content (103), and thereafter, reproduces an arbitrary scene in accordance with an instruction from an application (102). A drawing determination section (107), when the scene being reproduced by the GUI content player section (105) is the same as the scene specified by the application (102), determines that the scene is to be drawn. A reproduction control section (104), in accordance with a result of the determination performed by the drawing determination section (107), instructs a drawing section 108 to draw the scene being reproduced.

## Description

### TECHNICAL FIELD

The present invention relates to a GUI content reproducing device and a program. More particularly, the present invention relates to a GUI content reproducing device and a program which display a GUI content including a plurality of elements, which can be reproduced, starting from an arbitrary part thereof.

### BACKGROUND ART

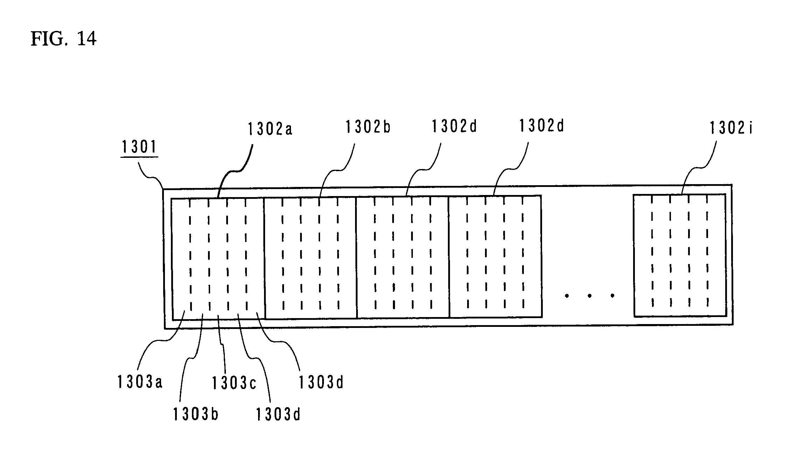

FIG. 14 is a schematic diagram illustrating one example of a GUI (Graphical User Interface) content. A GUI content 1301 is a content having audio, animation of vector graphics, and the like combined therein and is generated by a GUI content creation device. The GUI content 1301 includes a plurality of scenes 1302a to 1302i. Further, each of the scenes 1302a to 1302i includes a plurality of segments which are delimited so as to have predetermined time intervals. For example, the scene 1302a includes five segments 1303a to 1303e. An instruction of processing for transition from one scene to another scene while reproducing the GUI content 1301, processing for transition from one segment to another segment, or a display content is assigned to each of the scenes or each of the segments.

As a specific example of the GUI content, for example, Macromedia Flash (registered trademark), SVG (Scalable Vector Graphics) standardized by an internet standards organization W3C (World Wide Web Consortium), OpenGL (registered trademark) which is standard specification for 3D graphics, and the like are cited. In general, these GUI contents 1301 have been widely used as a display content which is displayed on a WEB browser (for example, Internet Explore or Mozilla). In recent years, an attempt to utilize the GUI content as not only the display content displayed on the WEB browser but also a GUI for a built-in device has been made.

In order to reproduce the above-mentioned GUI content, a GUI content reproducing device has conventionally been utilized. The conventional GUI content reproducing device includes a GUI content player for reproducing the GUI content. The GUI content player reproduces a GUI content passed by an application or the like. The GUI content reproducing device also has functions of generating and discarding the GUI content player.

In addition, a drawing method to improve ungainliness in a drawing process in which a complex figure or the like is drawn on a general display device has been known (for example, see patent document 1). In the drawing method described in patent document 1, while the complex figure which requires processing time is being drawn on a display screen, transferring a region, which is being drawn, to a physical region on a frame buffer is disabled. And when the process of drawing the complex figure is completed, transferring the region, which has been drawn, to the physical region on the frame buffer is enabled. By employing such a method, visual complication is improved since the drawing process is not displayed while the complex figure is being drawn.
Patent document 1: Japanese Laid-Open Patent Publication No. 5-46136

### DISCLOSURE OF THE INVENTION

### PROBLEMS TO BE SOLVED BY THE INVENTION

However, in a certain kind of a GUI content player, a scene which is to be first reproduced after loading a GUI content cannot be defined. Accordingly, in the GUI content player, a GUI content can be reproduced starting only from a predetermined first scene. Therefore, the GUI content player, after reproducing the predetermined first scene, reproduces an arbitrary scene which is specified.

Because of such a constraint in specification of the GUI content player, even when a creator of a GUI content desires to display an arbitrary scene after loading the GUI content, the predetermined first scene is displayed. Therefore, a problem that a display content which the creator of the GUI content does not intend is displayed on a display screen arises.

In order to reproduce the GUI content starting from an arbitrary scene which is specified, it is required to expand a function of the GUI content player by modifying the GUI content player itself so as to enable specifying the arbitrary scene.

In order to solve the above-mentioned problem, an object of the present invention is to provide a GUI content reproducing device and a program which are capable of displaying a GUI content starting from an arbitrary part thereof by utilizing an existing GUI content player.

### SOLUTION TO THE PROBLEMS

In order to solve the above-mentioned problem, a first aspect of the present invention is directed to a GUI content reproducing device operable to reproduce a GUI content including a plurality of elements in accordance with an instruction from an application and to instruct a drawing section to draw the reproduced GUI content. The GUI content reproducing device comprises: a GUI content player section capable of reproducing a predetermined element immediately after loading the GUI content and thereafter, reproducing an arbitrary element; a condition storage section for storing a drawing condition specified by the application; a condition determination section for determining whether or not the drawing condition stored in the condition storage section is satisfied each time the GUI content player section reproduces one element; and a reproduction control section for instructing the drawing section to draw the reproduced GUI content when the condition determination section determines that the drawing condition stored in the condition storage section is satisfied.

In such a configuration, after loading the GUI content, the element specified by the application is first displayed. Therefore, the GUI content can be displayed as intended by a creator of the GUI content by utilizing an existing GUI content player section.

The condition storage section may store an element specified by the application, and the condition determination section may determine that the drawing condition is satisfied when an element being reproduced by the GUI content player section is the same as the element stored in the condition storage section.

In such a configuration, since a particular element included in the GUI content can be directly specified by the application, the reproduction of the GUI content can be controlled in a detailed manner.

The condition determination section may not determine whether or not the drawing condition is satisfied after having determined that the drawing condition is satisfied, and the reproduction control section may instruct the drawing section to continuously draw the reproduced GUI content after the condition determination section has determined that the drawing condition is satisfied.

In such a configuration, after the drawing determination section has once determined that the element is to be drawn, succeeding elements being reproduced are unconditionally drawn, whereby the succeeding elements can be reproduced in an efficient manner.

The application may further specify condition determination information indicating whether or not condition determination is to be performed by the condition determination section, the condition determination section may not determine whether or not the drawing condition is satisfied when the condition determination information indicates that the condition determination is not to be performed, and the reproduction control section may instruct the drawing section to continuously draw the reproduced GUI content when the condition determination information indicates that the condition determination is not to be performed.

In such a configuration, since whether or not the determination is performed by the drawing determination section can be specified by the application, a method of reproducing the GUI content can be changed in an arbitrary manner.

The GUI content may include at least one scene to which a drawing content is assigned, and the element may be the scene.

In such a configuration, since the scene first displayed after loading the GUI content can be specified, displaying the GUI content can be controlled for each of the scenes.

The GUI content may include at least one segment to which a predetermined time interval and a drawing content are assigned, and the element may be the segment.

In such a configuration, since a content first displayed after loading the GUI content can be specified by the segment having a predetermined time interval, the reproduction of the GUI content can be controlled in a detailed manner.

The GUI content may include at least one scene having a plurality of segments, to each of which a predetermined time interval and a drawing content are assigned, and the element may be at least either one of the scene and the segment.

In such a configuration, since a content first displayed after loading the GUI content can be specified by a combination of the scene and the segment, the reproduction of the GUI content can be controlled in a detailed manner.

The condition storage section may store the number of times that an element is reproduced, and the number of times being specified by the application. The condition determination section may determine that the drawing condition is satisfied, when the number of times that an element is reproduced by the GUI content player section is equal to the number of times stored in the condition storage section.

In such a configuration, since a reference to the number of times that the reproduction is actually performed by the GUI content player section is made, displaying the GUI content can be controlled based on the number of times, specified by the application, that the reproduction is performed.

The condition storage section may store unlock information which is specified by the application and includes a plurality of items; the GUI content player section may acquire information regarding the items included in the unlock information from the application, and thereby may update the information regarding the items included in the unlock information; and the condition determination section may determine that the drawing condition is satisfied, when the information regarding all the items included in the unlock information is updated.

In such a configuration, when acquiring the information from the application is completed, the GUI content is drawn. Therefore, the acquired information can be reflected in the GUI content.

The GUI content may include: a first element to which information update request processing for acquiring information from the application is assigned; and at least one second element to which an unlock request is assigned, the unlock information being for requesting the drawing section to start drawing when the information acquisition processing is completed. The condition storage section may store, as the drawing condition, issuing of the unlock request, the GUI content player section may request the information update processing by reproducing the first element, may repeatedly reproduce the at least one second element and in response to completion of the information update processing, issues the unlock request, and the condition determination section, in response to the issuing of the unlock request, may determine that the drawing condition is satisfied.

In such a configuration, drawing the GUI content can be easily controlled by utilizing functions of the conventional GUI content player section.

A second aspect of the present invention is directed to a program which reproduces a GUI content including a plurality of elements in accordance with an instruction from an application and instructs a drawing section to draw the reproduced GUI content. The program causes a computer to function as: GUI content player means capable of reproducing a predetermined element immediately after loading the GUI content and thereafter, reproducing an arbitrary element; condition storage means for storing a drawing condition specified by the application; condition determination means for determining whether or not the drawing condition stored in the condition storage section is satisfied each time the GUI content player section reproduces one element; and reproduction control means for instructing the drawing section to draw the reproduced GUI content when the condition determination section determines that the drawing condition stored in the condition storage section is satisfied.

In such a configuration, after loading the GUI content, the element specified by the application is first displayed. Therefore , by using the program, the GUI content reproducing device which is capable of displaying the GUI content as intended by a creator of the GUI content can be realized.

A third aspect of the present invention is directed to an integrated circuit which reproduces a GUI content including a plurality of elements in accordance with an instruction from an application and instructs a drawing section to draw the reproduced GUI content. The integrated circuit has integrated therein circuits which function as: a GUI content player section capable of reproducing a predetermined element immediately after loading the GUI content and thereafter, reproducing an arbitrary element; a condition storage section for storing a drawing condition specified by the application; a condition determination section for determining whether or not the drawing condition stored in the condition storage section is satisfied each time the GUI content player section reproduces one element; and a reproduction control section for instructing the drawing section to draw the reproduced GUI content when the condition determination section determines that the drawing condition stored in the condition storage section is satisfied.

In such a configuration, by using the integrated circuit, the GUI content reproducing device which is capable of displaying the GUI content as intended by a creator of the GUI content can be realized.

### EFFECT OF THE INVENTION

According to the GUI content reproducing device of the present invention, even when a GUI content player not capable of specifying a part which is first displayed after loading a GUI content is used, display can be started from an arbitrary part included in the GUI content as intended by a creator of the GUI content without modifying the GUI content player itself.

### BRIEF DESCRIPTION OF THE DRAWINGS

[FIG. 1] FIG. 1 is a diagram showing usage states of a mobile terminal device which includes a GUI content reproducing device according to a first embodiment of the present invention.
[FIG. 2] FIG. 2 is a schematic diagram showing one example of the GUI content which realizes the display screen shown in FIG. 1.
[FIG. 3] FIG. 3 is a block diagram illustrating a configuration of the GUI content reproducing device according to the first embodiment of the present invention.
[FIG. 4] FIG. 4 is a sequence diagram illustrating control processing performed by the GUI content reproducing device shown in FIG. 3.
[FIG. 5] FIG. 5 is a diagram illustrating processes of displaying the GUI content, which are performed by the GUI content reproducing device according to the first embodiment of the present invention.
[FIG. 6] FIG. 6 is a diagram illustrating processes of displaying the GUI content only by using the GUI content player.
[FIG. 7] FIG. 7 is a block diagram illustrating a configuration of a GUI content reproducing device according to a second embodiment of the present invention.
[FIG. 8A] FIG. 8A is a schematic diagram illustrating one example of the GUI content shown in FIG. 7.
[FIG. 8B] FIG. 8B is a schematic diagram illustrating another example of the GUI content shown in FIG. 7.
[FIG. 9] FIG. 9 is a sequence diagram showing control processing performed by the GUI content reproducing device shown in FIG. 7.
[FIG. 10] FIG. 10 is a block diagram illustrating a configuration of a GUI content reproducing device according to a third embodiment of the present invention.
[FIG. 11] FIG. 11 is a sequence diagram showing control processing performed by the GUI content reproducing device shown in FIG. 10.
[FIG. 12] FIG. 12 is a block diagram illustrating a configuration of a GUI content reproducing device according to a fourth embodiment of the present invention.
[FIG. 13] FIG. 13 is a sequence diagram showing control processing performed by the GUI content reproducing device.
[FIG. 14] FIG. 14 is a schematic diagram illustrating one example of a GUI content.

### DESCRIPTION OF THE REFERENCE CHARACTERS

- 15, 25: scene
- 24, 26: segment
- 101, 201, 301, 401: GUI content reproducing device
- 102, 202, 302, 402,: application
- 103, 203, 303, 403: GUI content
- 104, 204, 304, 404: reproduction control section
- 105, 205: GUI content player section
- 106: transition destination scene storage section
- 107, 207, 307: drawing determination section
- 108, 208, 308, 408: drawing section
- 206: transition destination segment storage section
- 306: specified number of times storage sections
- 406: unlock information storage section
- 407: unlock determination section

### BEST MODE FOR CARRYING OUT THE INVENTION

### (First embodiment)

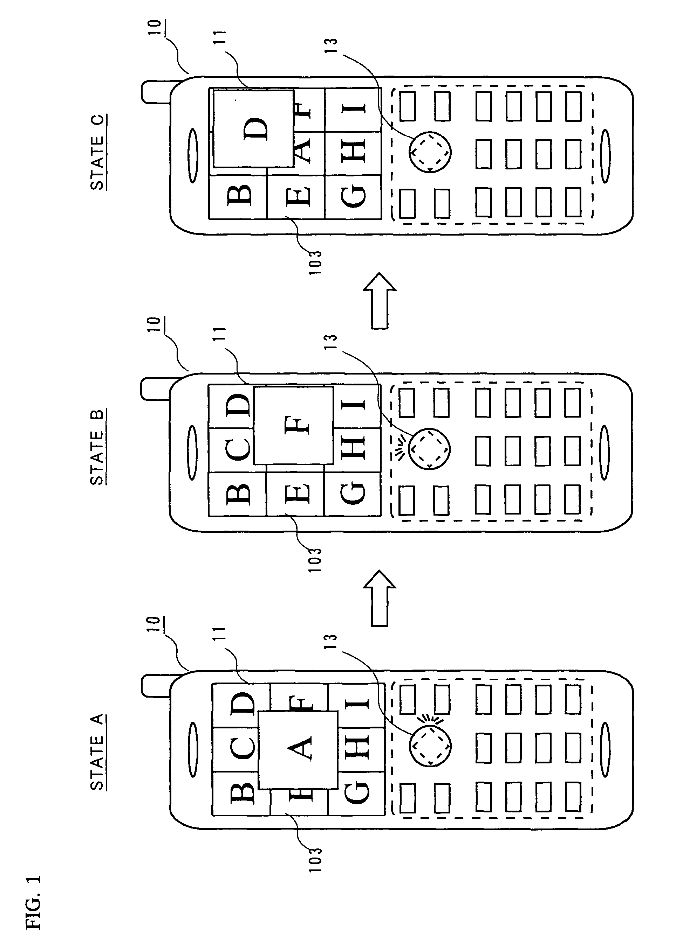

FIG. 1 is a diagram showing usage states of a mobile terminal device which includes a GUI content reproducing device according to a first embodiment of the present invention. In FIG. 1, an example in which a GUI content 103 is used as a menu screen of a mobile telephone 10 is shown.

First, as shown in a state A, the menu screen including a plurality of icons A to I are displayed, by using the GUI content 103, on a display screen 11 of the mobile telephone 10. Among the icons A to I, the central icon A is focused and displayed in an enlarged manner. Next, when an operation key 13 is pressed down once in a right direction, as shown in a state B, the right icon F is focused and displayed in an enlarged manner. Further, when the operation key 13 is pressed down once in an upper direction, as shown in state C, the upper icon D is focused and displayed in an enlarged manner. In this way, by using the GUI content 103, one icon selected from among the plurality of icons A to I can be displayed in an enlarged manner with good viewability.

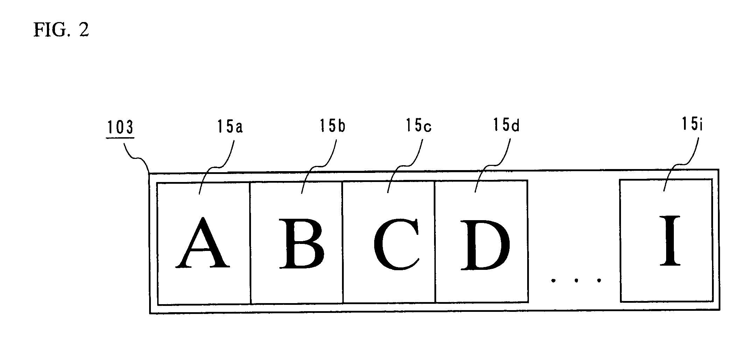

FIG. 2 is a schematic diagram showing one example of the GUI content which realizes the display screen shown in FIG. 1. The GUI content 103 shown in FIG. 2 includes scenes 15a to 15i which correspond to states in which the icons A to I are selected. At a head of each of the scenes , a label is attached, thereby enabling identification of predetermined processing included in the GUI content or a predetermined display content for each of the scenes. In a case where each of the scenes includes the below-mentioned plurality of segments, a label may be attached at a head of each of the segments included in each of the scenes. A content to be displayed on the display screen and an action are assigned to each of the scenes 15a to 15i. As a content which can be displayed by each of the scenes, for example, images, vector graphics, characters, polygons, movies and the like are cited. As functions which can be realized by defining actions, for example, transition to an arbitrary scene in the GUI content, reproduction of sound, reproduction of a movie, acquisition of data from outside, and the like are cited.

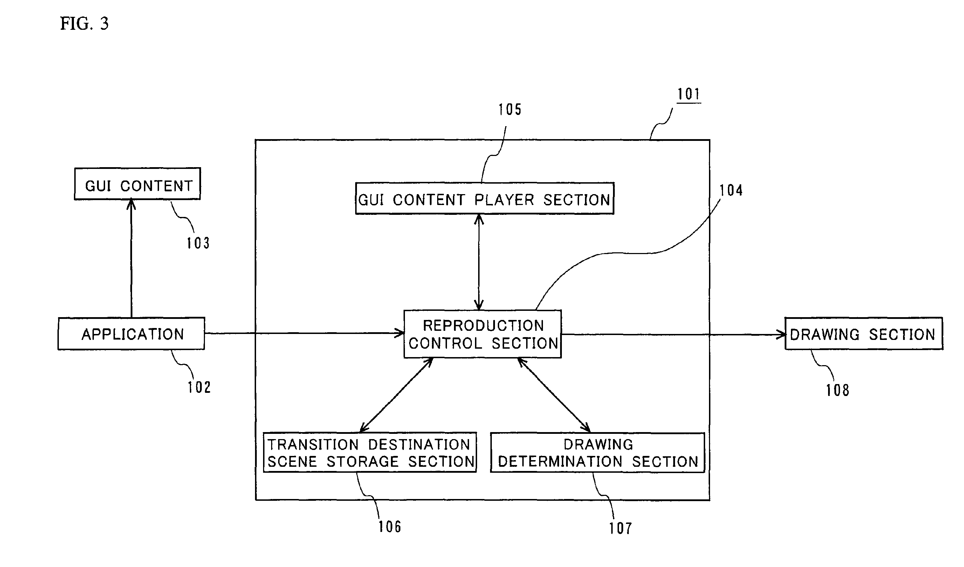

FIG. 3 is a block diagram illustrating a configuration of the GUI content reproducing device according to the first embodiment of the present invention. The GUI content reproducing device 101 shown in FIG. 3 reproduces the GUI content 103, starting from an arbitrary scene specified by an application 102. In the present embodiment, the application 102 is further capable of specifying information indicating whether or not drawing determination is performed in a drawing determination section 107.

A drawing section 108 controls drawing on a display screen of, for example, a display unit or the like. The drawing section 108, in accordance with a drawing request from the GUI content reproducing device 101, draws the GUI content 103 on the display screen.

The GUI content reproducing device 101 shown in FIG. 3 comprises a GUI content player section 105, a transition destination scene storage section 106, a drawing determination section 107, and a reproduction control section 104.

The GUI content player section 105 receives the GUI content 103 specified by the application 102 and loads the received GUI content 103. The GUI content player section 105, immediately after loading the GUI content 103, reproduces a first scene which is predetermined in the GUI content 103, and thereafter, in accordance with an instruction from the application 102 or processing which is assigned to a scene, reproduces an arbitrary scene. The GUI content player section 105 reproduces a scene, executes the processing which is assigned to the scene, and prepares drawing data of a display content which is assigned to the scene. And the GUI content player section 105, when it is required to draw the prepared drawing data, issues a drawing request to the reproduction control section 104.

The GUI content 103 is capable of defining an instruction for acquiring an arbitrary scene which is instructed from outside (a function which is not supported by the GUI content player section 105).

The GUI content player section 105 may be, for example, a player, such as Macromedia Flash (registered trademark), which reproduces 2D graphics, a player which reproduces SVG, and a player, such as OpenGL (registered trademark), which reproduces 3D graphics.

The transition destination scene storage section 106 stores a scene specified by the application 102. More specifically, the transition destination scene storage section 106, in accordance with an instruction from the reproduction control section 104, stores a scene passed by the reproduction control section 104. The transition destination scene storage section 106, in accordance with an instruction from the reproduction control section 104, returns the stored scene to the reproduction control section 104.

The drawing determination section 107 compares a first scene and a second scene, and determines that the first scene is to be drawn when the first scene is the same as the second scene. More specifically, the drawing determination section 107 receives , from the reproduction control section 104, a scene being reproduced by the GUI content player section 105 and a scene stored in the transition destination scene storage section 106. When the scene reproduced by the GUI content player section 105 is the same as the scene stored in the transition destination scene storage section 106, the drawing determination section 107 determines that the scene being reproduced is to be drawn. When the scene being reproduced by the GUI content player section 105 is different from the scene stored in the transition destination scene storage section 106, the drawing determination section 107 determines that the scene being reproduced is not to be drawn.

The reproduction control section 104, in accordance with an instruction from the application 102, controls the GUI content player section 105, the transition destination scene storage section 106, and the drawing determination section 107.

More specifically, the reproduction control section 104 first passes the GUI content 103 specified by the application 102 to the GUI content player section 105 and makes a request of reproducing the GUI content 103. Upon reception of the drawing request from the GUI content player section 105, the reproduction control section 104 acquires, from the GUI content player section 105, the scene which the GUI content player section 105 is currently reproducing.

The reproduction control section 104 causes the transition destination scene storage section 106 to store one scene specified by the application 102. The reproduction control section 104 acquires the scene stored in the transition destination scene storage section 106.

Further, the reproduction control section 104 outputs, to the drawing determination section 107, the scene acquired from the GUI content player section 105, that is, the scene being reproduced by the GUI content player section 105, as the first scene. The reproduction control section 104 outputs, to the drawing determination section 107, the scene acquired from the transition destination scene storage section 106, as the second scene.

Based on a result of the determination performed by the drawing determination section 107, the reproduction control section 104 instructs the drawing section 108 to draw the scene being reproduced by the GUI content player section 105. More specifically, when the drawing determination section 107 determines that the scene being reproduced by the GUI content player section 105 is to be drawn, the reproduction control section 104 instructs the drawing section 108 to draw a display content of the scene being reproduced by the GUI content player section 105. On the other hand, when the drawing determination section 107 determines that the scene being reproduced by the GUI content player section 105 is not to be drawn, the reproduction control section 104 does not issue a drawing request to the drawing section 108.

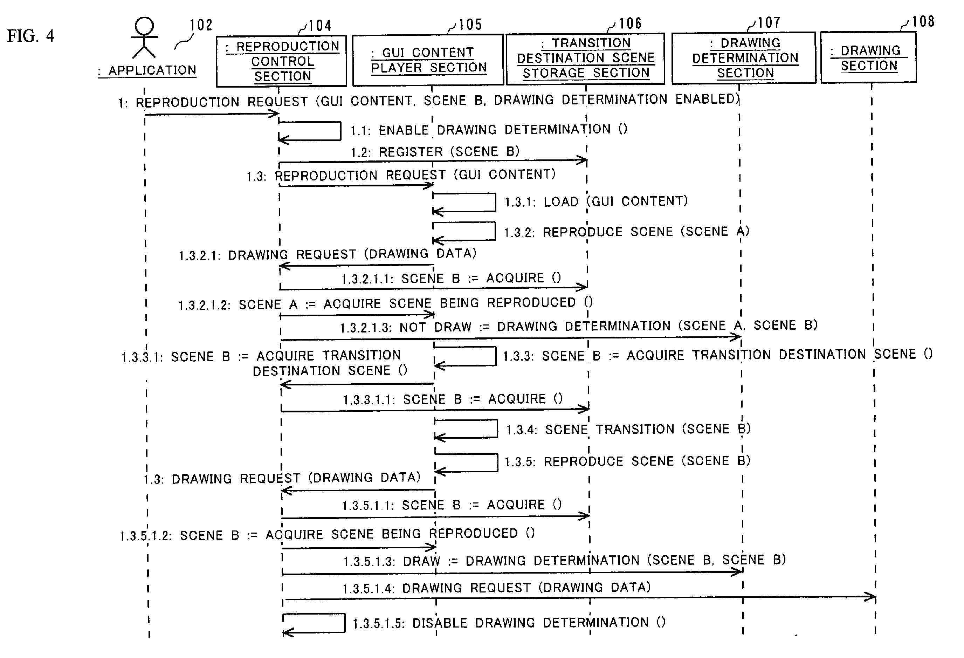

FIG. 4 is a sequence diagram illustrating control processing performed by the GUI content reproducing device shown in FIG. 3. Hereinafter, with reference to FIG. 4, the processing which is performed by the GUI content reproducing device according to the present embodiment in order to display the GUI content as intended by a creator of the GUI content will be described. In the below explanation, it is assumed that the GUI content includes at least a scene A and a scene B. In this case, the scene A is a scene defined so as to be first displayed after loading the GUI content and the scene B is a scene which is specified by the application 102 so as to be first displayed.

First, the application 102 specifies a GUI content, the scene B to be first displayed after the GUI content player section 105 has loaded the GUI content 103, and information indicating that drawing determination is performed in the drawing determination section 107, and issues a reproduction request to the reproduction control section 104 (step 1).

In accordance with the information which is specified by the application 102 and indicates that the drawing determination is performed, the reproduction control section 104 makes the drawing determination enabled (step 1.1). Next, the reproduction control section 104 causes the transition destination scene storage section 106 to store the scene B specified by the application as a transition destination scene (step 1.2). The reproduction control section 104 passes the GUI content specified by the application 102 to the GUI content player section 105 and issues the request of reproducing the GUI content 103 to the GUI content player section 105 (step 1.3).

The GUI content player section 105, in accordance with an instruction from the reproduction control section 104, loads the passed GUI content (step 1.3.1). Upon completion of loading the GUI content, the GUI content player section 105 reproduces the predetermined first scene A in the GUI content (step 1.3.2). The GUI content player section 105 prepares the drawing data by reproducing the scene A and issues the drawing request to the reproduction control section 104 (step 1.3.2.1).

Next, the reproduction control section 104 acquires the transition destination scene B stored in the transition destination scene storage section 106 (step 1.3.2.1.1). The reproduction control section 104 acquires, from the GUI content player section, the scene A being currently reproduced by the GUI content player section 105 (step 1.3.2.1.2). The reproduction control section 104 outputs, to the drawing determination section 107, the scene A being reproduced by the GUI content player section 105 and the transition destination scene B, and acquires the result of the determination performed by the drawing determination section 107 (step 1.3.2.1.3). In this case, because the scene A being currently reproduced by the GUI content player section 105 is different from the scene B stored in the transition destination scene storage section 106, the drawing determination section 107 determines that the scene A being reproduced is not to be drawn. In accordance with the determination result which is outputted from the drawing determination section 107 and indicates that the drawing is not performed, the reproduction control section 104 does not issue the request of drawing the scene A to the drawing section 108 and executes the next processing.

Next, in order to acquire the transition destination scene B specified from outside, the GUI content player section 105 issues an instruction which is previously defined in the GUI content (step 1.3.3). Note that this instruction is not defined in the GUI content player section 105. As a method in which the GUI content player section 105 executes the instruction which is not defined in the GUI content player section 105, utilization of a mechanism which the GUI content player section 105 has is considered. As one example, a method in which in a case where Macromedia Flash (registered trademark) is used as the GUI content, the GUI content player section 105 may issue a getURL method at the time predetermined in the GUI content, in order to acquire the transition destination scene. For example, there is a method in which the GUI content player section 105 issues a "getURL (getNextScene)" method and acquires a result thereof by executing a "loadVariablesNum" method.

Next, the GUI content player section 105 causes the reproduction control section 104 to acquire the transition destination scene B (step 1.3.3.1).

Next, the reproduction control section 104 acquires the transition destination scene B from the transition destination scene storage section 106 (step 1.3.3.1.1).

Next, the GUI content player section 105, by using a function of the GUI content player section 105, causes transition of a scene to the transition destination scene B acquired from the reproduction control section 104 (step 1.3.4). Next, the GUI content player section 105 reproduces the scene B (step 1.3.5). The GUI content player section 105 issues a request of drawing the prepared drawing data to the reproduction control section 104 (step 1.3.5.1).

The reproduction control section 104 acquires the transition destination scene B from the transition destination scene storage section 106 (step 1.3.5.1.1). The reproduction control section 104 acquires the scene B being currently reproduced by the GUI content player section 105 (step 1.3.5.1.2). The reproduction control section 104 outputs, to the drawing determination section 107, the scene B being currently reproduced by the GUI content player section 105 and the transition destination scene B acquired from the transition destination scene storage section 106, and acquires a result of the determination performed by the drawing determination section 107 (step 1.3.5.1.3). At this time, because the scene B being currently reproduced by the GUI content player section 105 is the same as the transition destination scene B, the drawing determination section 107 determines that the scene B being reproduced by the GUI content player section 105 is to be drawn.

Based on the result of the determination performed by the drawing determination section 107, the reproduction control section 104 issues a request of drawing the scene B being reproduced by the GUI content player section 105 to the drawing section 108 (step 1.3.5.1.4). The drawing section 108 draws a display content assigned to the scene B on a display screen of, for example, a display unit or the like.

The reproduction control section 104 sets the drawing determination section 107 not to thereafter perform the drawing determination (step 1.3.5.1.5). Accordingly, the scene specified by the application 102 is first displayed after the GUI content has been loaded, and thereafter, the scenes are reproduced in the order previously defined in the GUI content.

At the above-mentioned step 1, when the application 102 specifies information of disabling drawing determination, i.e. , information indicating that the determination is not to be performed by the drawing determination section 107, the reproduction control section 104 issues, to the drawing section 108, a request of unconditionally drawing the scene being reproduced by the GUI content player section 105.

At the above-mentioned step 1.3.5.1.5, also in a case where the reproduction control section 104 makes the setting so that the drawing determination is not performed, the reproduction control section 104 similarly issues, to the drawing section 108, the request of unconditionally drawing the scene being reproduced by the GUI content player section 105.

Next, an effect of the above-described GUI content reproducing device according to the present embodiment will be described

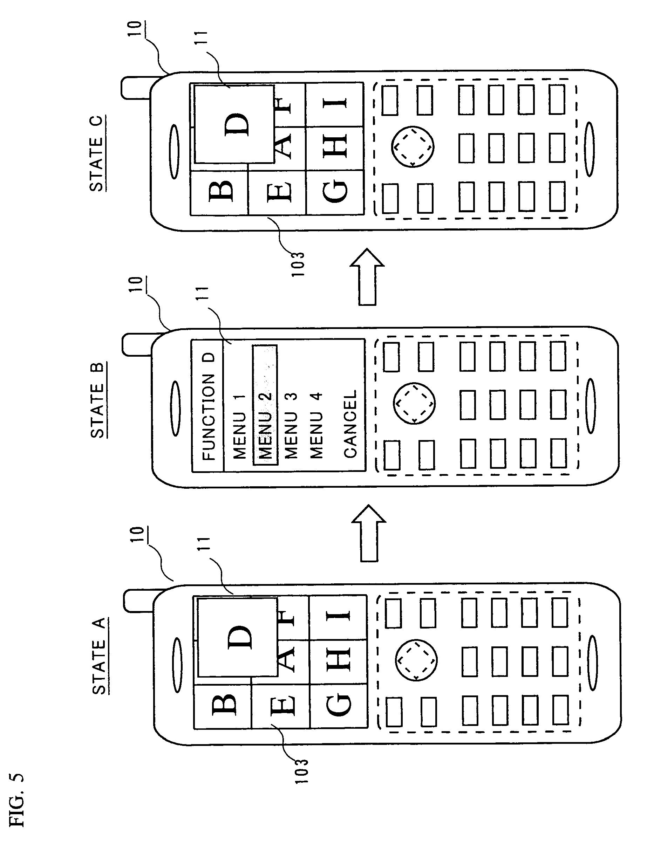

FIG. 5 is a diagram illustrating processes of displaying the GUI content, which are performed by the GUI content reproducing device according to the first embodiment of the present invention. FIG. 5 shows transition occurring in the screen, which follows the transition shown in FIG. 1. The GUI content 103 shown in FIG. 5 includes, as shown in FIG. 2, a plurality of scenes A to I. The scene A is predetermined as a scene which is reproduced immediately after loading the GUI content 103.

First, as shown in a state A, the menu screen having the plurality of icons is displayed, by using the GUI content 103, on the display screen 11 of the mobile telephone 10. In the state A, the icon D among the plurality of icons A to I realized by the GUI content 103 is selected. The icon D, in accordance with a display content defined in the GUI content 103, is displayed in an enlarged manner.

Next, when a user of the mobile telephone 10 presses down the operation key of the mobile telephone 10 and executes a function shown by the icon D, as shown in a state B, a sub-menu of a function D is displayed on the display screen 11.

Here, for example, a case where the user selects "CANCEL" in the sub-menu of the function D in order to stop the execution of the function D is assumed. In a case where the creator of the GUI content 103 intends that when the sub-menu is returned to a main menu, the main menu is displayed again in a state immediately before the sub-menu is displayed, it is required to display again the same display content as that in the state A. Therefore, the application or the like included in the mobile telephone 10 specifies the scene D included in the GUI content 103 and causes the GUI content reproducing device to reproduce the GUI content 103.

As described above, the GUI content reproducing device according to the present embodiment is capable of displaying the GUI content 103, starting from the specified scene D. In other words, immediately after loading the GUI content 103, the GUI content player section first reproduces a first scene A which is predetermined in the GUI content 103 and thereafter, reproduces the specified scene D. On the other hand, because the reproduction control section, based on the result of the determination performed by the drawing determination section, does not issue the request of drawing the scene A to the drawing section, the scene A is not displayed on the display screen 11. When the specified scene D is reproduced by the GUI content player section 105, the reproduction control section issues the request of drawing the scene D being reproduced. Accordingly, as shown in a state C, on the display screen 11, the content displayed immediately before the sub-menu of the function D is displayed, that is the same display content as that in the state A, is drawn and the icon D is displayed in an enlarged manner.

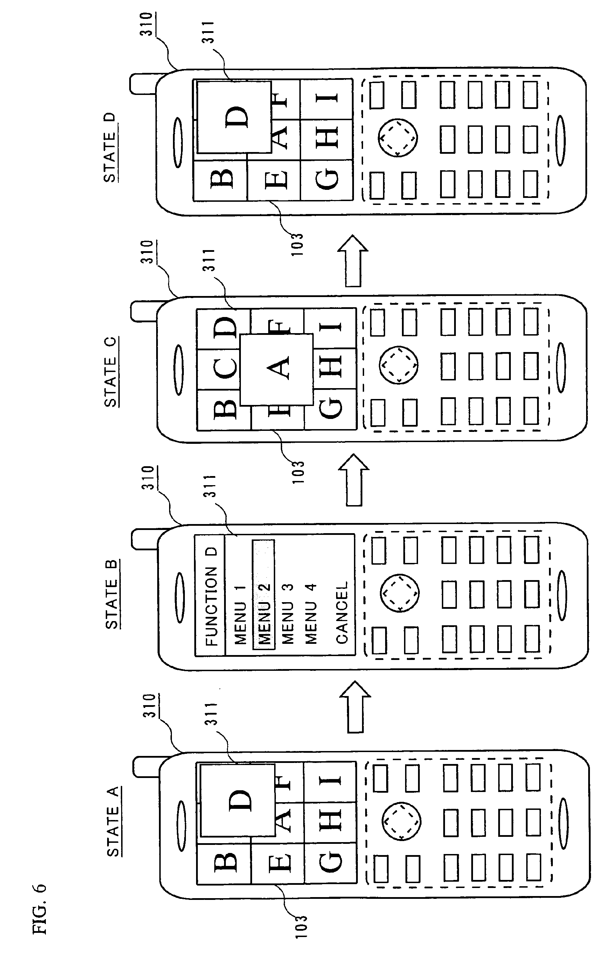

FIG. 6 is a diagram illustrating processes of displaying the GUI content only by using the GUI content player. The GUI content 103 shown in FIG. 6 is the same as that shown in FIG. 5.

First, as shown in a state A, a menu screen having a plurality of icons is displayed by using the GUI content 103 on a screen 11 of a mobile telephone 310. In the state A, an icon D among the plurality of icons A to I realized by the GUI content 103 is selected. The icon D is displayed in an enlarged manner in accordance with a display content defined in the GUI content 103.

Next, when a user of the mobile telephone 310 presses down an operation key of the mobile telephone 310 and executes a function shown by the icon D, a sub-menu of the function D, as shown in a state B, is displayed on a display screen 311.

Here, for example, a case where the user of the mobile telephone 310 selects "CANCEL" in the sub-menu of the function D in order to stop the execution of the function D is assumed. In a case where the creator of the GUI content 103 intends that when the sub-menu is returned to a main menu, the main menu is displayed again in a state immediately before the sub-menu is displayed, it is required to display again the same display content as that in the state A.

However, the GUI content player included in the mobile telephone 310, immediately after loading the GUI content 103, first reproduces the predetermined first scene A in the GUI content 103. Because whether or not the scene A is to be drawn cannot be determined only by using the GUI content player, as shown in a state C, the content of the scene A is displayed on the display screen 311. Thereafter, the GUI content player reproduces a scene D. Thus, as shown in a state D, a content of the scene D is displayed on the display screen 311.

As described above, if only the function of the GUI content player is used in order to display the GUI content, as shown in the state C, each time the GUI content is loaded, the first scene A in the GUI content 103 is invariably displayed on the display screen 311. Accordingly, the GUI content 103 is displayed in a manner which is not intended by the creator of the GUI content 103. Since through displaying the content in the manner not intended by the creator of the GUI content 103, the display screen 311 flickers, thereby leading to poor viewability of the display screen 311.

By contrast, the GUI content reproducing device according to the present embodiment displays the GUI content starting from the specified scene, thereby allowing the GUI content to be displayed as intended by the creator of the GUI content while utilizing the existing GUI content player section.

### (Second Embodiment)

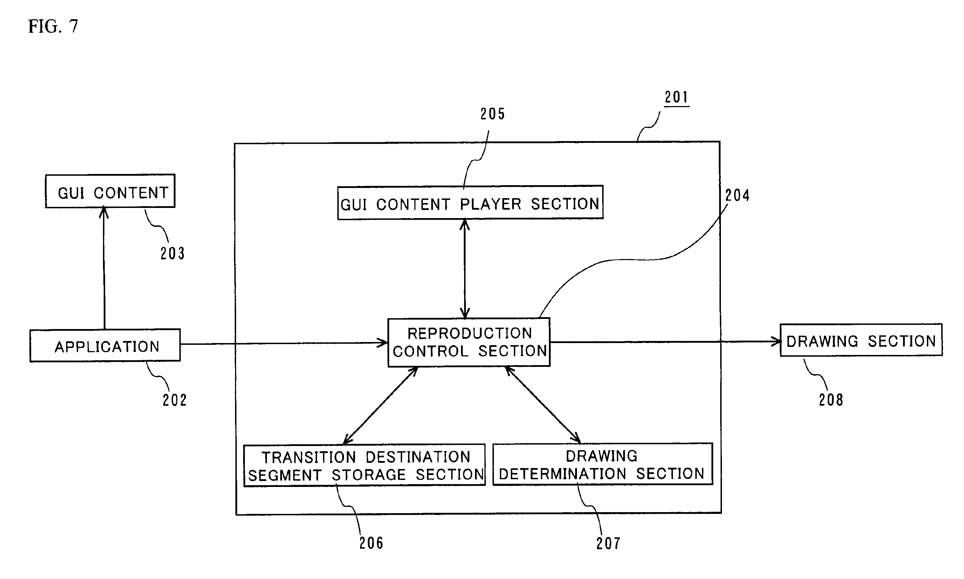

FIG. 7 is a block diagram illustrating a configuration of a GUI content reproducing device according to a second embodiment of the present invention. A basic configuration of the GUI content reproducing device 201 shown in FIG. 7 is the same as that of the first embodiment. However, a GUI content 203 in the present embodiment includes a plurality of segments having predetermined time intervals. Accordingly, the GUI content reproducing device 201 executes processing for each of the segments, instead of each of the scenes in the first embodiment.

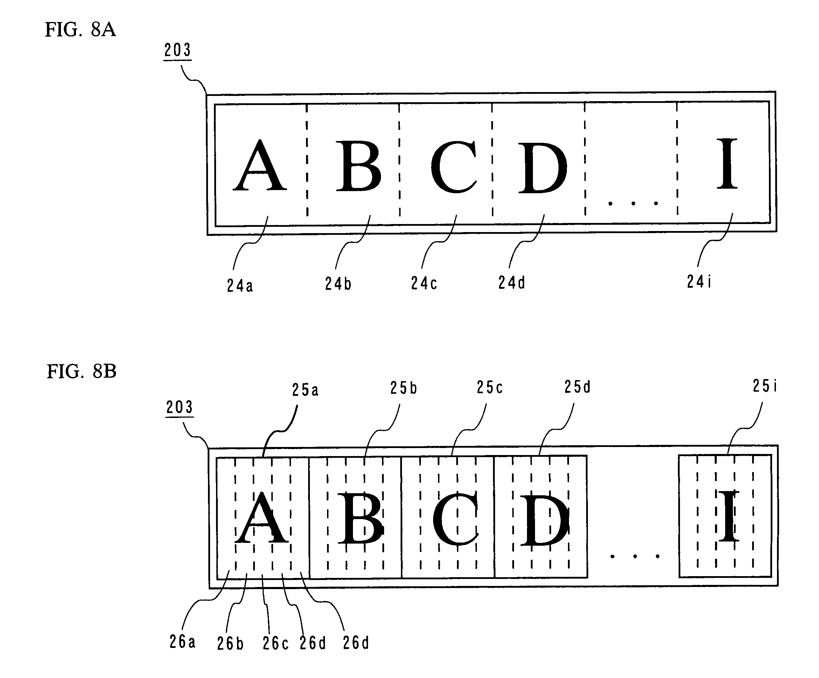

FIG. 8A is a schematic diagram illustrating one example of the GUI content shown in FIG. 7 and FIG. 8B is a schematic diagram illustrating another example of the GUI content shown in FIG. 7. The GUI content shown in FIG. 7 realizes the display screen shown in FIG. 1.

The GUI content 203 shown in FIG. 8A includes segments 24a to 24i which correspond to states in which the icon 24a to 24i are respectively selected. In each of the segments 24a to 24i, a content and an action to be displayed on a display screen are defined. As contents which can be displayed by each of the segments, for example, images, vector graphics, characters, polygons, movies, and the like are cited. As functions which can be realized by defining actions, for example, transition to an arbitrary scene in the GUI content, reproduction of sound, reproduction of a movie, acquisition of data from outside, and the like are cited.

As shown in FIG. 8B, the GUI content 203 may include scenes and segments. The GUI content 203 shown in FIG. 8B includes a plurality of scenes 25a to 25i. Each of the scenes 25a to 25i includes a plurality of segments which are delimited so as to have predetermined time intervals. For example, the scene 25a includes a plurality of segments 26a to 26e. For example, in a case where an animation is displayed by using the GUI content 203 when the icon A in FIG. 1 is selected, the displayed animation is constructed by the segments 26a to 26e, to each of which a display content is assigned. The display contents included in the segments 26a to 26e are defined as the scene 25a.

In addition to the above-mentioned example, a creator of the GUI content can create a GUI content by assigning arbitrary display contents and actions to the segments and the scenes. For example, in a case where an animation is displayed when an icon in FIG. 1 is selected, an action and an animation in the case where the icon is selected may be defined in each of the segments.

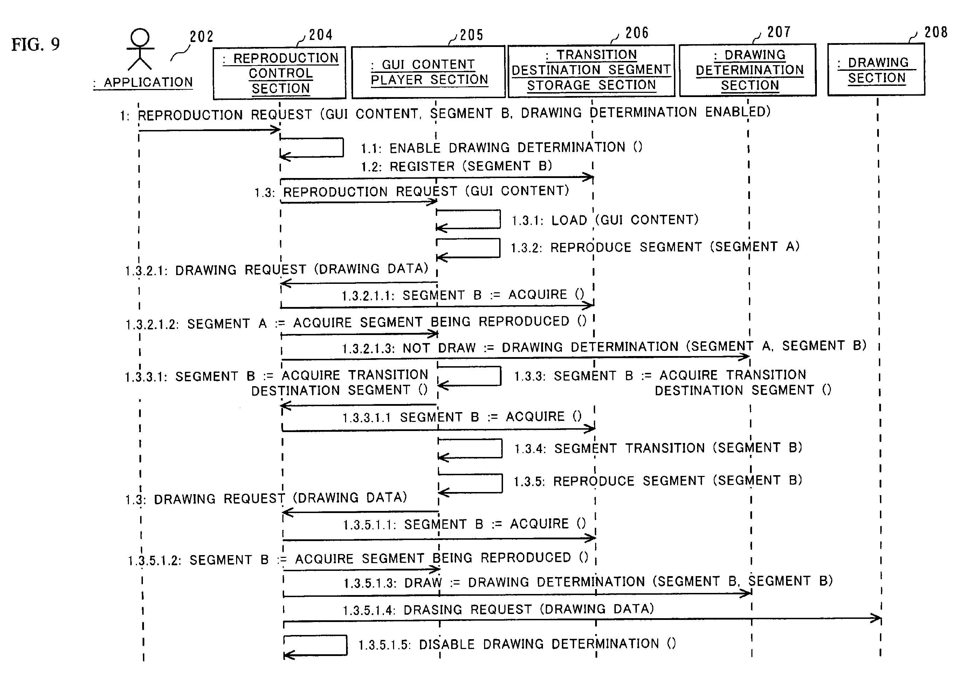

FIG. 9 is a sequence diagram showing control processing performed by the GUI content reproducing device shown in FIG. 7. Hereinafter, with reference to FIG. 9, processing in which the GUI content reproducing device according to the present embodiment displays the GUI content as intended by a creator of the GUI content will be described. In the below explanetion, it is assumed that the GUI content includes at least segments A and B. In this case, the segment A is a segment defined so as to be first displayed after loading the GUI content and the segment B is a segment specified, by an application 202, so as to be first displayed.

First, the application 202 specifies the GUI content, the segment B which a GUI content player section 205 first reproduces after loading the GUI content 203, and information indicating that drawing determination is performed by a drawing determination section 207, and issues a request of reproducing the GUI content to a reproduction control section 204 (step 1).

In accordance with the information which is specified by the application 202 and indicates that the drawing determination is performed, the reproduction control section 204 first makes the drawing determination enabled (step 1.1). Next, the reproduction control section 204 causes a transition destination segment storage section 206 to store the segment B specified by the application as a transition destination segment (step 1.2). The reproduction control section 204 passes, to the GUI content player section 205, the GUI content specified by the application 202 and issues a request of reproducing the GUI content 203 to the GUI content player section 205 (step 1.3).

In accordance with an instruction from the reproduction control section 204, the GUI content player section 205 loads the passed GUI content (step 1.3.1). Upon completion of loading the GUI content, the GUI content player section 205 reproduces the first segment A which is predetermined in the GUI content (step 1.3.2). The GUI content player section 205 prepares drawing data by reproducing the segment A and issues a drawing request to the reproduction control section 204 (step 1.3.2.1).

Next, the reproduction control section 204 acquires the transition destination segment B stored in the transition destination segment storage section 206 (step 1.3.2.1.1). The reproduction control section 204 acquires, from the GUI content player section 205, the segment A being currently reproduced by the GUI content player section 205 (step 1.3.2.1.2). The reproduction control section 204 outputs, to the drawing determination section 207, the segment A being reproduced by the GUI content player section and the transition destination segment B, and acquires a result of the determination performed by the drawing determination section 207 (step 1.3.2.1.3). In this case, because the segment A being currently reproduced by the GUI content player section 205 is difference from the segment B stored in the transition destination segment storage section 206, the drawing determination section 207 determines that the segment A being reproduced is not to be drawn. In accordance with the information which is outputted from the drawing determination section 207 and indicates that drawing is not performed, the reproduction control section 204 does not issue a request of drawing the segment A to a drawing section 208 and executes the next processing.

Next, in order to acquire the transition destination segment B specified from outside, the GUI content player section 205 issues an instruction which is previously defined in the GUI content (step 1.3.3). Note that this instruction is not defined in the GUI content player section 205. As a method in which the GUI content player section 205 executes the instruction which is not defined in the GUI content player section 205, utilization of a mechanism which the GUI content player section 205 has is considered. As one example, in a case where Macromedia Flash (registered trademark) is used as the GUI content, the GUI content player section 205 issues a getURL method at the time predetermined in the GUI content, in order to acquire the transition destination segment. For example, there is a method in which the GUI content player section 205 issues a "getURL (getNextScene)" method and acquires a result thereof by executing a "loadVariablesNum" method.

Next, the GUI content player section 205 causes the reproduction control section 204 to acquire the transition destination segment B (step 1.3.3.1).

Next, the reproduction control section 204 acquires the transition destination segment B from the transition destination segment storage section 206 (step 1.3.3.1.1).

Next, the GUI content player section 205, by using a function of the GUI content player section 205, causes transition of a segment to the transition destination segment B acquired from the reproduction control section 204 (step 1.3.4). Next, the GUI content player section 205 reproduces the segment B (step 1.3.5). The GUI content player section 205 issues a request of drawing the prepared drawing data to the reproduction control section 204 (step 1.3.5.1).

The reproduction control section 204 acquires the transition destination segment B from the transition destination segment storage section 206 (step 1.3.5.1.1). The reproduction control section 204 acquires the segment B being currently reproduced by the GUI content player section 205 (step 1.3.5.1.2). The reproduction control section 204 outputs, to the drawing determination section 207, the segment B being currently reproduced by the GUI content player section 205 and the transition destination segment B acquired from the transition destination segment storage section 206, and then acquires a result of the determination performed by the drawing determination section 207 (step 1.3.5.1.3). At this time, because the segment B being currently reproduced by the GUI content player section 205 is the same as the transition destination segment B, the drawing determination section 207 determines that the segment B being reproduced by the GUI content player section 205 is to be drawn.

Based on the result of the determination performed by the drawing determination section 207, the reproduction control section 204 issues a request of drawing the segment B being reproduced by the GUI content player section 205 to the drawing section 208 (step 1.3.5.1.4). The drawing section 208 draws the display content assigned to the segment B on a display screen, for example, of a display unit or the like.

The reproduction control section 204 sets the drawing determination section 207 not to thereafter perform the drawing determination (step 1.3.5.1.5). Accordingly, the segment specified by the application 202 is first displayed after loading the GUI content, and thereafter, the segments are reproduced in the order previously defined in the GUI content.

At the above-mentioned step 1, when the application 202 specifies information of disabling drawing determination, i.e., information indicating that the determination is not performed by the drawing determination section 207 , the reproduction control section 204 issues, to the drawing section 208, a request of unconditionally drawing the segment being reproduced by the GUI content player section 205. In a case where it is unnecessary to invariably display the first segment A, the second argument which is used when the application 202 specifies the segment first displayed may be unnecessary.

At the above-mentioned step 1.3.5.1.1, also in a case where the reproduction control section 204 makes the setting so that the drawing determination is not performed, the reproduction control section 204 similarly issues, to the drawing section 208, the request of unconditionally drawing the segment being reproduced by the GUI content player section 205.

The GUI content reproducing device according to the present embodiment is capable of exhibiting an effect similar to that of the GUI content reproducing device according to the first embodiment. In other words, the GUI content reproducing device according to the present embodiment reproduces the GUI content starting from the specified scene, thereby allowing the GUI content to be displayed as intended by a creator of the GUI content by utilizing the existing GUI content player section.

In addition, in the present embodiment, since the content which is first displayed after loading the GUI content can be specified by using the segments having predetermined time intervals, the reproduction of the GUI content can be controlled on a time basis in a detailed manner.

### (Third Embodiment)

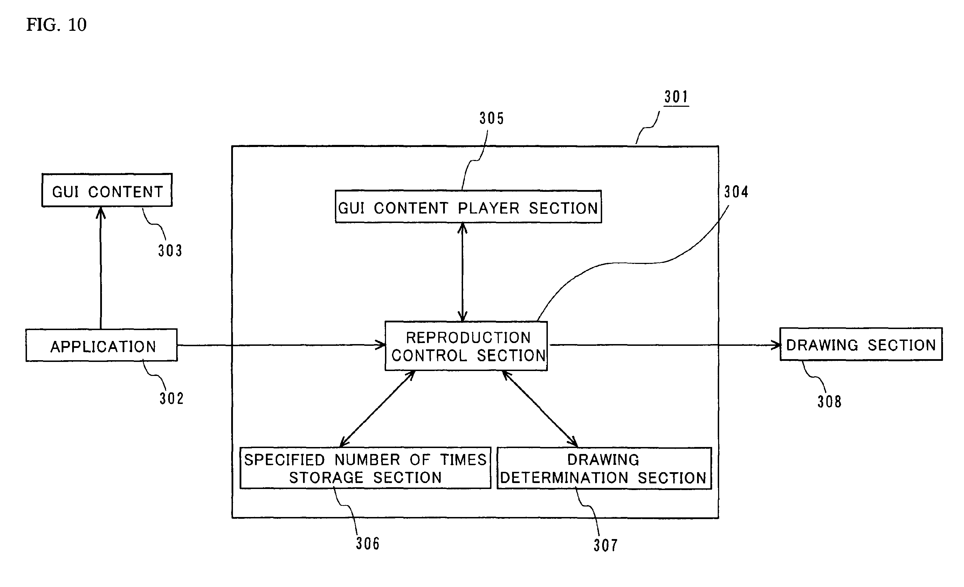

FIG. 10 is a block diagram illustrating a configuration of a GUI content reproducing device according to a third embodiment of the present invention. The GUI content reproducing device according to the third embodiment does not issue a drawing instruction to a drawing section while the total number of times that reproduction of a segment (or scene) is performed by a GUI content player section is less than the number of times which is specified by an application. The GUI content reproducing device issues the drawing instruction to the drawing section when the total number of times of the reproduction is equal to the number of times which is specified by the application. It is assumed that a GUI content 303 in the present embodiment, as in the second embodiment, is constructed by a plurality of segments.

The GUI content reproducing device 301 shown in FIG. 10 includes a specified number of times storage section 306, a drawing determination section 307, a reproduction control section 304, and a GUI content player section 305. Basic functions of the GUI content reproducing device 301, an application 302, the GUI content 303, and a drawing section 308 are the same as those in the second embodiment. Hereinafter, differences between the present embodiment and the second embodiment will be mainly described.

The specified number of times storage section 306 stores the number of times that a segment is reproduced, which is specified by the application 302. More specifically, the specified number of times storage section 306 stores the specified number of times, which the reproduction control section 304 receives from the application 302, in accordance with an instruction from the reproduction control section 304. The specified number of times storage section 306 also returns the stored specified number of times to the reproduction control section 304 in accordance with an instruction from the reproduction control section 304.

When the specified number of times, which is stored in the specified number of times storage section 306, is equal to the number of times that a segment is reproduced by the GUI content player section 305, the drawing determination section 307 determines that the GUI content being reproduced by the GUI content player section 305 is to be drawn. More specifically, the drawing determination section 307 receives the number of times that a segment is reproduced by the GUI content player section 305 and the specified number of times, which is stored in the specified number of times storage section 306, from the reproduction control section 304. While the number of times that a segment is reproduced by the GUI content player section 305 is less than the specified number of times, the drawing determination section 307 determines that the GUI content being reproduced is not to be drawn. When the number of times that a segment is reproduced by the GUI content player section 305 is equal to the specified number of times, the drawing determination section 307 determines that the GUI content being reproduced is to be drawn.

Based on an instruction from the application 302, the reproduction control section 304 controls the GUI content player section 305, the specified number of times storage section 306, and the drawing determination section 307.

More specifically, the reproduction control section 304 stores the number of times, which is specified by the application 302, in the specified number of times storage section 306. The reproduction control section 304 also acquires the specifiednumber of times, which is stored in the specified number of times storage section 306.

Further, the reproduction control section 304 has a variable for holding the number of times that a segment is reproduced by the GUI content player section 305. The reproduction control section 304 increments the variable by one each time one segment is reproduced by the GUI content player section 305 and a drawing request is issued to the reproduction control section 304 to count the number of times that a segment is reproduced by the GUI content player section 305.

The reproduction control section 304 outputs, to the drawing determination section 307, the number of times that a segment is reproduced by the GUI content player section 305 and the specified number of times, which is stored in the specified number of times storage section 306.

When the drawing determination section 307 determines that the GUI content being reproduced by the GUI content player section 305 is to be drawn, the reproduction control section 304 issues an instruction of drawing the GUI content being reproduced to the drawing section 308. On the other hand, when the drawing determination section 307 determines that the GUI content being reproduced by the GUI content player section 305 is not to be drawn, the reproduction control section 304 does not issue the instruction of drawing the GUI content being reproduced to the drawing section 308.

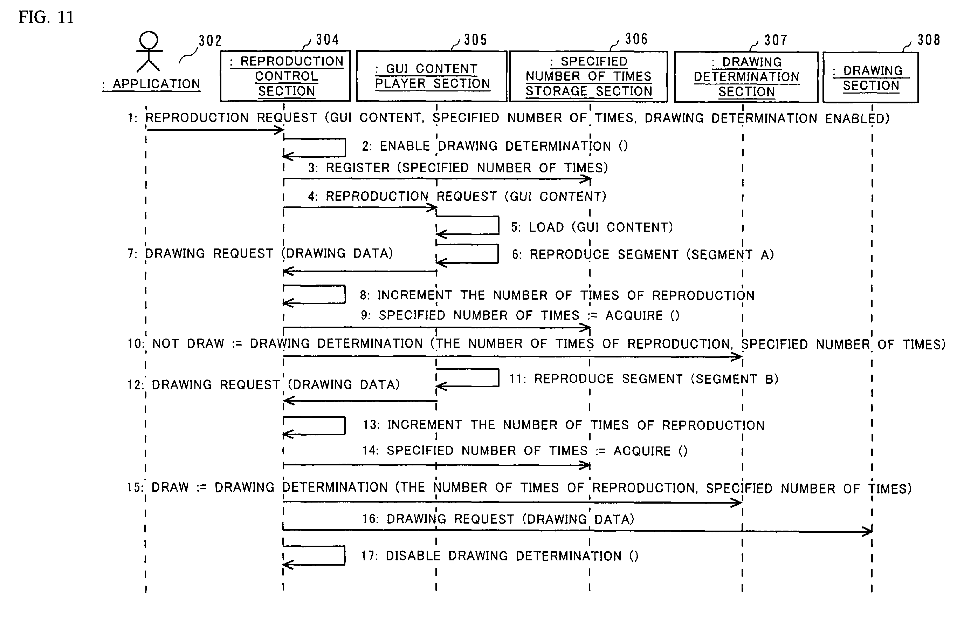

FIG. 11 is a sequence diagram showing control processing performed by the GUI content reproducing device shown in FIG. 10. Hereinafter, with reference to FIG. 11, processing in which the GUI content reproducing device according to the present embodiment displays the GUI content as intended by a creator of the GUI content will be described. In the below explanation, it is assumed that the GUI content includes at least segments A and B. The segment A is defined so as to be reproduced immediately after loading the GUI content and thereafter, to undergo a transition to the segment B. In order to facilitate the explanation, a case where the application specifies two as the specified number of times, i.e. a case where drawing is started when a segment is reproduced by the GUI content player section 305 two times, is assumed.

First, the application 302 specifies a GUI content, the specified number of times, and information of enabling drawing determination, i.e., information indicating that the determination is performed by the drawing determination section 307, and issues a request of reproducing the GUI content to the reproduction control section 304 (step 1).

In accordance with the information of enabling drawing determination, specified by the application 302, the reproduction control section 304 first sets the drawing determination so as to be enabled (step 2). Next, the reproduction control section 304 registers the specified number of times, which is specified by the application, in the specified number of times storage section (step 3). The reproduction control section 304 passes the GUI content specified by the application 302 to the GUI content player section 305 and issues a request of reproducing the GUI content to the GUI content player section 305 (step 4).

In accordance with an instruction from the reproduction control section 304, the GUI content player section 305 loads the passed GUI content (step 5). Upon completion of loading the GUI content, the GUI content player section 305 reproduces the first segment A which is predetermined in the GUI content (step 6). The GUI content player section 305 prepares drawing data and issues a drawing request to the reproduction control section 304 (step 7).

Next, in response to the drawing request from the GUI content player section 305, the reproduction control section 304 increments, by one, the number of times that a segment has been reproduced by the GUI content player section 305 (step 8). As a result of the step 8, the number of times that a segment has been reproduced is indicated as one. The reproduction control section 304 acquires the specified number of times stored in the specified number of times storage section 306 (step 9). The reproduction control section 304 outputs, to the drawing determination section 307, the number of times that a segment has been reproduced and the specified number of times, and acquires a result of the determination performed by the drawing determination section 307 (step 10). In this case, because the number of times that a segment has been reproduced (= 1) is less than the specified number of times (= 2), the drawing determination section 307 determines that the GUI content being reproduced is not to be drawn. In accordance with the determination result which is outputted from the drawing determination section 307 and indicates that the drawing is not performed, the reproduction control section 304 does not issue a drawing request to the drawing section 308 and executes the next processing.

Next, the GUI content player section 305 reproduces the segment B which follows the segment A (step 11). The GUI content player section 305, by reproducing the segment B, prepares drawing data and issues a drawing request to the reproduction control section 304 (step 12).

Next, in response to the drawing request from the GUI content player section 305, the reproduction control section 304 increments, by one, the number of times that a segment has been reproduced (step 13). As a result of the step 13, the number of times that a segment has been reproduced is indicated as two. The reproduction control section 304 acquires the specified number of times stored in the specified number of times storage section 306 (step 14). The reproduction control section 304 outputs, to the drawing determination section 307, the number of times that a segment has been reproduced and the specified number of times and acquires a result of the determination performed by the drawing determination section 307 (step 15). In this case, because the number of times that a segment has been reproduced (= 2) is equal to the specified number of times (= 2), the drawing determination section 307 determines that the GUI content being reproduced is to be drawn.

Based on the result of the determination performed by the drawing determination section 307, the reproduction control section 304 issues a request of drawing the GUI content being reproduced by the GUI content player section 305 to the drawing section 308 (step 16). In accordance with the drawing request, the drawing section 308 draws a display content assigned to the segment B on a display screen, for example, of a display unit or the like.

The reproduction control section 304 sets the drawing determination section 307 not to thereafter perform the drawing determination (step 17). Accordingly, after loading the GUI content, the segments are reproduced in the order previously defined in the GUI content.

In the GUI content reproducing device 301 according to the present embodiment, only when the number of times that a segment has been reproduced by the GUI content player section 305 is equal to the specified number of times, which is specified by the application 302, the reproduced GUI content is displayed on a display or the like. Accordingly, when the setting is made so that the order of the content which is to be first displayed on the screen (for example, the reproduction order of the segment B is previously defined so as to be second) corresponds to the specified number of times (for example, two times) which is specified by the application, the GUI content can be displayed by utilizing the existing GUI content player as intended by a creator of the GUI content.

Although in the example shown in FIG. 11, the case where the application specifies two as the specified number of times is described, also in a case where the application specifies three as the specified number of times, the GUI content reproducing device according to the present embodiment can exhibit the similar effect.

### (Fourth Embodiment)

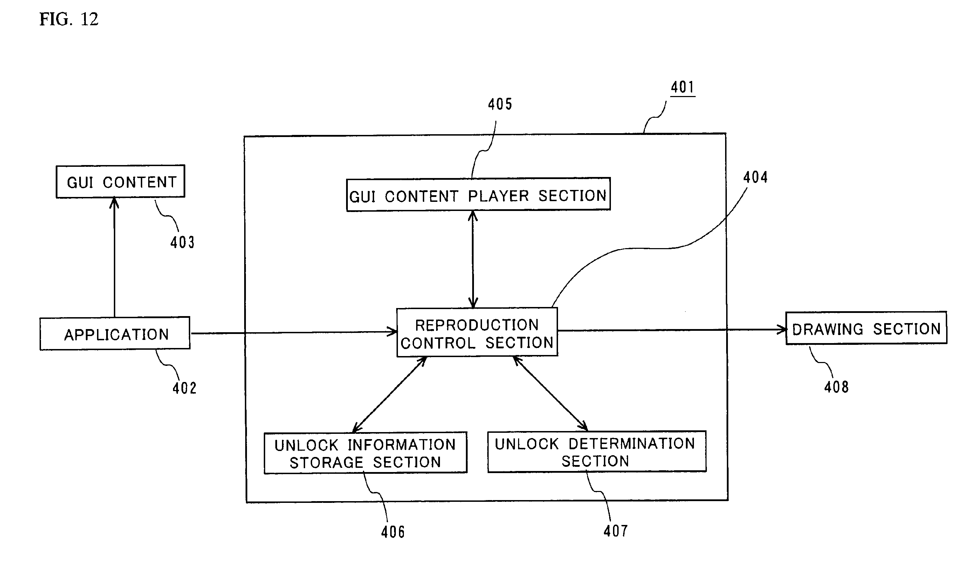

FIG. 12 is a block diagram illustrating a configuration of a GUI content reproducing device according to a fourth embodiment of the present invention. In order to acquire necessary information from an application 402, the GUI content reproducing device 401 according to the fourth embodiment reproduces a GUI content 403 and executes processing defined in the GUI content 403. When acquiring the necessary information is completed, the GUI content reproducing device 401 issues an instruction of drawing the GUI content being reproduced to a drawing section 408. It is assumed that the GUI content 403 in the present embodiment, as in the second embodiment, is also constructed by a plurality of segments.

The GUI content reproducing device 401 shown in FIG. 12 includes an unlock information storage section 406, an unlock determination section 407, a reproduction control section 404, and a GUI content player section 405. Basic functions of the GUI content reproducing device 401, the application 402, the GUI content 403, and the drawing section 408 are the same as those in the second embodiment. Hereinafter, differences between the present embodiment and the second embodiment will be mainly described.

The unlock information storage section 406 stores unlock information specified by the application 402. The unlock information includes one or more information item, which the GUI content player section 405 acquires from the application 402. More specifically, in order to reflect acquired predetermined information in a display content, the GUI content player section 405 may acquire predetermined information, which the application 402 holds, when reproducing the GUI content 403. For example, in a case where the GUI content reproducing device 401 is applied to a mobile telephone, as the predetermined information, information indicating that a mail is received, information indicating that an IC card is inserted into a slot, information indicating that a PIM (Personal Information Manager) is locked, information indicating a kind of an application which is running, or the like is cited. The unlock information storage section 406 stores the unlock information outputted from the application 402 in accordance with an instruction from the reproduction control section 404. The unlock information storage section 406 also returns the stored unlock information to the reproduction control section 404 in accordance with an instruction from the reproduction control section 404.

The unlock determination section 407 determines whether or not the GUI content player section 405 has acquired all the necessary information. More specifically, the unlock determination section 407 receives, from the reproduction control section 404, updated information items and the unlock information stored in the unlock information storage section 406. When the updated information items agree with all items included in the unlock information, the unlock determination section 407 determines that the GUI content being reproduced by the GUI content player section 405 is to be drawn. When the items of the updated information do not agree with all the items included in the unlock information, the unlock determination section 407 determines that the GUI content being reproduced by the GUI content player section 405 is not to be drawn.

The reproduction control section 404, based on an instruction from the application 402, controls the GUI content player section 405, the unlock information storage section 406, and the unlock determination section 407.

More specifically, the reproduction control section 404 stores the unlock information specified by the application 402 in the unlock information storage section 406. The reproduction control section 404 also acquires the unlock information stored in the unlock information storage section 406. Further, the reproduction control section 404 acquires information outputted as a data stream by the application 402 and passes the information to the GUI content player section 405.

The reproduction control section 404 outputs, to the unlock determination section 407 , items of the information acquired from the application 402 and the unlock information acquired from the unlock information storage section 406.

When the unlock determination section 407 determines that the GUI content being reproduced by the GUI content player section 405 is to be drawn, the reproduction control section 404 instructs the drawing section 408 to draw the GUI content being reproduced. On the other hand, when the unlock determination section 407 determines that the GUI content being reproduced by the GUI content player section 405 is not to be drawn, the reproduction control section 404 does not instruct the drawing section 408 to draw the GUI content being reproduced.

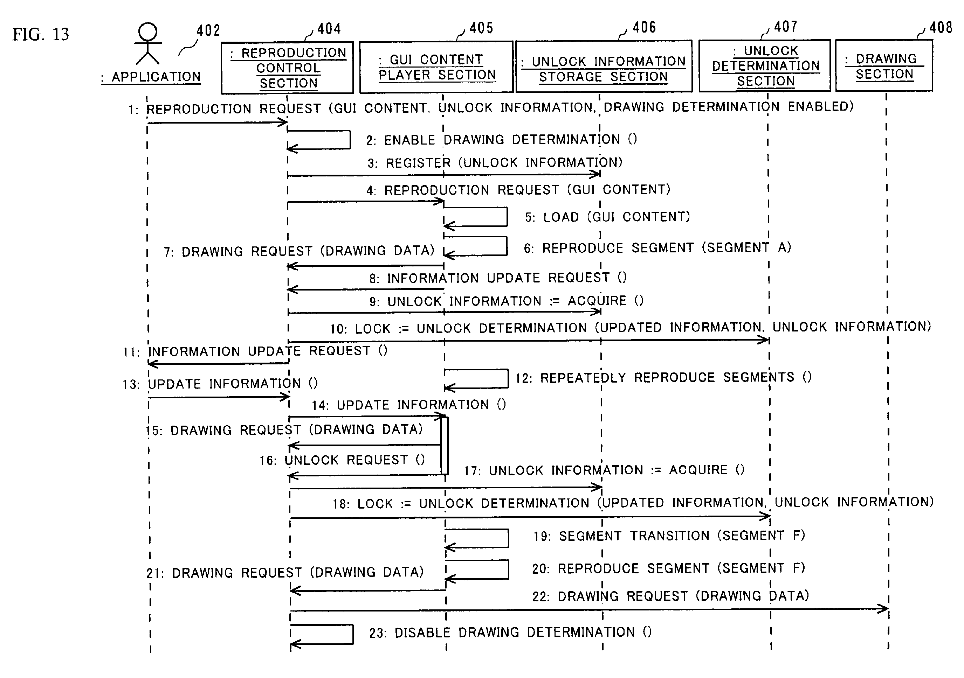

FIG. 13 is a sequence diagram showing control processing performed by the GUI content reproducing device shown in FIG. 12. Hereinafter, with reference to FIG. 13, the processing which is performed by the GUI content reproducing device 401 according to the present embodiment in order to display the GUI content as intended by a creator of the GUI content will be described. In the below explanation, it is assumed that the GUI content includes at least segments A to F. Processing for issuing an information update request is assigned to the segment A. Processing for issuing an unlock request when an information update which is performed by the application 402 is completed is assigned to each of the segments B and C. A display content is assigned to the section F. Further, when the GUI content is reproduced, the segments A, B and C are reproduced in this order. Processing for causing transition to the segment B is assigned to the segment C.

First, the application 402 specifies the GUI content, the unlock information, and information of enabling drawing determination, i.e., information indicating that the determination is performed by the unlock determination section 407, and issues a request of drawing the GUI content to the reproduction control section 404 (step 1).

The reproduction control section 404, in accordance with the drawing determination enable information specified by the application 402, first sets the drawing determination so as to be enabled (step 2). Next, the reproduction control section 404 registers the specified number of times, which is specified by the application, in the specified number of times storage section (step 3). The reproduction control section 404 passes the GUI content specified by the application 402 to the GUI content player section 405 and issues a request of reproducing the GUI content to the GUI content player section 405 (step 4).

In accordance with an instruction from the reproduction control section 404, the GUI content player section 405 loads the passed GUI content (step 5). Upon completion of loading the GUI content, the GUI content player section 405 reproduces the first segment A which is predetermined in the GUI content (step 6). The GUI content player section 405 issues a drawing request to the reproduction control section 404 (step 7).

As mentioned above, the processing for issuing the information update request is assigned to the segment A. Accordingly, by reproducing the segment A, the GUI content player section 405 executes the processing assigned to the segment A and issues the information update request to the reproduction control section 404 (step 8).

Next, the reproduction control section404 acquires the unlock information from the unlock information storage section 406 (step 9). The reproduction control section 404 outputs, to the unlock determination section 407, the items of the information updated by the application 402 and the acquired unlock information, and acquires a result of the determination performed by the unlock determination section 407 (step 10). At this stage, the application 402 has not yet updated the information which is requested by the GUI content player section 405. Accordingly, the unlock determination section 407 determines that the GUI content being reproduced is not to be drawn. In accordance with the determination result which is outputted from the unlock determination section 407 and indicates that the GUI content being reproduced is not to be drawn, the reproduction control section 404 does not issue a drawing request to the drawing section 408 and executes the next processing.

Next, in response to the information update request from the GUI content player section 405, the reproduction control section 404 issues the information update request to the application 402 (step 11).

Next, while acquiring necessary information from the application 402, the GUI content player section 405 repeatedly reproduces the segments B and C (step 12). In order for the GUI content player section 405 to read the information notified by the application 402 in response to the information update request (step 11), a certain amount of time is needed. The reason why the GUI content player section 405 repeatedly reproduces the predetermined segments B and C is that it is required to prevent the next processing from being executed until the GUI content player section 405 has completed reading of information to be notified. In other words, in order to wait for the information notified by the application 402 to be notified to the GUI content, it is required for the GUI content player section 405 to execute the above-mentioned repeated processing. It is because the processing for causing the transition to the segment B is assigned to the segment C as mentioned above that the GUI content player section 405 is capable of repeatedly reproducing the segments B and C. In FIG. 13, in order to facilitate the explanation, the reproduction of segment B, the reproduction of the segment C, and the transition to the segment B are collectively described as the processing at step 12.

Next, in response to the information update request from the reproduction control section 404, the application 402 outputs the requested information as a data stream to the reproduction control section 404 (step 13). The reproduction control section 404 passes, to the GUI content player section 405, the information received from the application 402 (step 14). The updated information includes information for specifying the segment F for the transition which is caused when the GUI content player section 405 completes acquiring the information.

The GUI content player section 405 issues a drawing request to the reproduction control section 404 each time each of pieces of the GUI is reproduced (step 15). When the GUI content player section 405 has acquired all the necessary information, the GUI content player section 405 executes the processing which is assigned to the segment B or C being reproduced and issues an unlock request to the reproduction control section 404 (step 16).

The reproduction control section 404 acquires the unlock information stored in the unlock information storage section 406 (step 17). The reproduction control section 404 outputs the items of the updated information and the unlock information to the unlock determination section 407 and acquires a result of the determination performed by the unlock determination section 407 (step 18). At this stage, because the GUI content player section 405 has acquired all the necessary information, the items of the updated information agree with all the items included in the unlock information. Accordingly, the unlock determination section 407 determines that the GUI content being reproduced is to be drawn.

In accordance with information which indicates the transition destination segment and is included in the information acquired from the application, the GUI content player section 405 causes the transition to the segment F (step 19). Next, the GUI content player section 405 reproduces the segment F to which the display content is assigned (step 20) and issues a drawing request to the reproduction control section 404 (step 21).

The reproduction control section 404, based on the result of the determination performed by the unlock determination section 407, issues an instruction of drawing the GUI content being reproduced by the GUI content player section 405 to the drawing section 408 (step 22). The drawing section 408 draws the display content assigned to the segment F on a display screen, for example, of a display unit or the like.

The reproduction control section 404 sets the unlock determination section 407 not to thereafter perform the drawing determination (step 23). Accordingly, after loading the GUI content, the segments are reproduced in the order previously defined in the GUI content.

For convenience sake in the explanation, steps 11 to 15 shown in FIG. 13 are described in the predetermined order. However, since the application 402 outputs the requested information as the data stream, the GUI content player section 405 needs a certain amount of time to complete acquiring the necessary information. Therefore, in reality, the processes at steps 11 to 15 shown in FIG. 13 are executed in a parallel manner.

In the GUI content reproducing device 401 according to the present embodiment, when the GUI content player section 405 completes acquiring the necessary information from the application, the GUI content is drawn. Accordingly, by utilizing the existing GUI content player, the GUI content can be displayed as intended by a creator of the GUI content. In particular, the GUI content reproducing device 401 according to the present embodiment makes it possible to reflect the information acquired from the application 402 in the display content, thereby enhancing a degree of flexibility in a display content of the GUI content.

In each of the above-described embodiments, a plurality of GUI contents may be held by the application. The application may acquire the GUI content from outside. The application may acquire the GUI content through downloading via the Internet; attachment to e-mail; wireless communication using infrared rays, Bluetooth (registered trademark), wireless LAN or the like; and wire communication using LAN or the like.

In each of the above-described embodiments, although as the elements which forms the GUI content, the scenes or the segments are cited, the elements which forms the GUI content may be elements having other appellations (for example, frames), and it is only required that parts thereof can be reproduced.

Further, the GUI content reproducing device according to each of the above-described embodiments is capable of reproducing also contents created by SMIL (Synchronized Multimedia Integration Language) and MPEG. In this case, the reproduction of the contents can be controlled by segments having predetermined time intervals.

Further, in the each of the above-described embodiments, it is only required that the GUI content player section is capable of reproducing a format in which a display content or processing is assigned to the elements such as scenes and segment

Further, in each of the above-described embodiments, based on the result of the determination performed by the drawing determination section, the reproduction control section may control drawing performed by the drawing section on the display screen. In other words, when the drawing determination section determines that an element being reproduced by the GUI content player section is to be drawn, the reproduction control section issues a request of disabling the drawing performed by the drawing section on the display or the like. When the drawing determination section determines that an element being reproduced by the GUI content player section is not to be drawn, the reproduction control section may cancel the request of disabling the drawing.

Further, each of the above-described embodiments can be realized by causing a computer to execute a program, which is able to cause a computer to execute the aforementioned procedure, stored in a recording medium (a ROM, a RAM, or a hard disk, etc.). This computer is a notion including a computer incorporated in a mobile terminal apparatus. In this case, the program may be executed after it is stored in a storage device via a recording medium, or may be directly executed from the recording medium. Here, the recording medium is a ROM, a RAM, a semiconductor memory such as a flash memory, a magnetic disk memory such as a flexible disk and a hard disk, an optical disk memory such as a CD-ROM, a DVD, and a BD, a memory card, or the like. The "recording medium" as mentioned herein is a notion including a communication medium such as a telephone line and a carrier line.

Further, functional blocks (in FIGS. 3, 7, 10, and 12) of the GUI content reproducing device according to each of the above-described embodiments may be realized as an LSI, which is an integrated circuit. These functional blocks may be constructed in a single chip, or may be constructed in a chip so as to include a part or all of the functional blocks. The LSI mentioned herein may be referred to as an IC, a system LSI, a super LSI, or an ultra LSI, depending on the degree of integration. Also, a method of integration is not limited to LSI, and may be realized by a dedicated circuit or a general purpose processor. Also, an FPGA (Field Programmable Gate Array), which is an LSI that can be programmed after manufacture, or a reconfigurable processor enabling connections and settings of the circuit cells in the LSI to be reconfigured may be used. Further, in a case where another integration technology replacing LSI becomes available due to improvement of a semiconductor technology or due to emergence of another technology derived therefrom, integration of the functional blocks may be performed using such a new integration technology. For example, biotechnology may be applied to the integration.

Further, although in each of the above-described embodiments, the example in which the present invention is applied to the mobile telephone is shown, the present invention may be similarly applied to a mobile terminal apparatus having a display screen, such as a PDA, a digital camera , and an in-vehicle apparatus , etc.

Further, in the above-described second embodiment, in a case where the scenes and the segments are included in the GUI content, a transition destination may be specified by a combination of the scene and the segment. In this case, the GUI content reproducing device is capable of controlling the reproduction of the GUI content on a time basis in a detailed manner.

### INDUSTRIAL APPLICABILITY

The GUI content reproducing device and the program according to the present invention includes the drawing determination section which determines whether or not an element reproduced by the GUI content player section is to be drawn, and are capable of reproducing the GUI content starting from an arbitrary element, and therefore, are useful when applied to a mobile information terminal apparatus such as a mobile telephone, a PDA, and a digital camera. The GUI content reproducing device according to the present invention can be applied to an information processing terminal having a display unit, for example, such as a PC, a car navigation system.

## Claims

1. A GUI content reproducing device operable to reproduce a GUI content including a plurality of elements in accordance with an instruction from an application and to instruct a drawing section to draw the reproduced GUI content, comprising:
a GUI content player section capable of reproducing a predetermined element immediately after loading the GUI content and thereafter, reproducing an arbitrary element;
a condition storage section for storing a drawing condition specified by the application;
a condition determination section for determining whether or not the drawing condition stored in the condition storage section is satisfied each time the GUI content player section reproduces one element; and
a reproduction control section for instructing the drawing section to draw the reproduced GUI content when the condition determination section determines that the drawing condition stored in the condition storage section is satisfied.

2. The GUI content reproducing device according to claim 1, wherein
the condition storage section stores an element specified by the application, and
the condition determination section determines that the drawing condition is satisfied when an element being reproduced by the GUI content player section is the same as the element stored in the condition storage section.

3. The GUI content reproducing device according to claim 1, wherein
the condition determination section does not determine whether or not the drawing condition is satisfied after having determined that the drawing condition is satisfied, and
the reproduction control section instructs the drawing section to continuously draw the reproduced GUI content after the condition determination section has determined that the drawing condition is satisfied.

4. The GUI content reproducing device according to claim 1, wherein
the application further specifies condition determination information indicating whether or not condition determination is to be performed by the condition determination section,
the condition determination section does not determine whether or not the drawing condition is satisfied when the condition determination information indicates that the condition determination is not to be performed, and
the reproduction control section instructs the drawing section to continuously draw the reproduced GUI content when the condition determination information indicates that the condition determination is not to be performed.

5. The GUI content reproducing device according to claim 1, wherein
the GUI content includes at least one scene to which a drawing content is assigned, and
the element is the scene.

6. The GUI content reproducing device according to claim 1, wherein
the GUI content includes at least one segment to which a predetermined time interval and a drawing content are assigned, and
the element is the segment.

7. The GUI content reproducing device according to claim 1, wherein
the GUI content includes at least one scene having a plurality of segments, to each of which a predetermined time interval and a drawing content are assigned, and
the element is at least either one of the scene and the segment.

8. The GUI content reproducing device according to claim 1, wherein
the condition storage section stores the number of times that an element is reproduced, the number of times being specified by the application, and
the condition determination section determines that the drawing condition is satisfied when the number of times that an element is reproduced by the GUI content player section is equal to the number of times stored in the condition storage section.

9. The GUI content reproducing device according to claim 1, wherein
the condition storage section stores unlock information which is specified by the application and includes a plurality of items,
the GUI content player section acquires information regarding the items included in the unlock information from the application, and thereby updates the information regarding the items included in the unlock information, and
the condition determination section determines that the drawing condition is satisfied when the information regarding all the items included in the unlock information is updated.

10. The GUI content reproducing device according to claim 1, wherein
the GUI content includes:
a first element to which information update request processing for acquiring information from the application is assigned; and
at least one second element to which an unlock request is assigned, the unlock request being for requesting the drawing section to start drawing when the information acquisition processing is completed,
the condition storage section stores, as the drawing condition, issuing of the unlock request,
the GUI content player section requests the information update processing by reproducing the first element, repeatedly reproduces the at least one second element and, in response to completion of the information update processing, issues the unlock request, and
the condition determination section, in response to the issuing of the unlock request, determines that the drawing condition is satisfied.

11. A program which reproduces a GUI content including a plurality of elements in accordance with an instruction from an application and instructs a drawing section to draw the reproduced GUI content, causing a computer to function as:
GUI content player means capable of reproducing a predetermined element immediately after loading the GUI content and thereafter, reproducing an arbitrary element;
condition storage means for storing a drawing condition specified by the application;
condition determination means for determining whether or not the drawing condition stored in the condition storage section is satisfied each time the GUI content player section reproduces one element; and
reproduction control means for instructing the drawing section to draw the reproduced GUI content when the condition determination section determines that the drawing condition stored in the condition storage section is satisfied.

12. An integrated circuit which reproduces a GUI content including a plurality of elements in accordance with an instruction from an application and instructs a drawing section to draw the reproduced GUI content, having integrated therein circuits which function as:
a GUI content player section capable of reproducing a predetermined element immediately after loading the GUI content and thereafter, reproducing an arbitrary element;
a condition storage section for storing a drawing condition specified by the application;
a condition determination section for determining whether or not the drawing condition stored in the condition storage section is satisfied each time the GUI content player section reproduces one element; and
a reproduction control section for instructing the drawing section to draw the reproduced GUI content when the condition determination section determines that the drawing condition stored in the condition storage section is satisfied.
